# EUROPÄISCHE PATENTSCHRIFT

(11) **EP 0 643 951 B1**
(45) Veröffentlichungstag und Bekanntmachung des Hinweises auf die Patenterteilung: **07.04.1999**
(21) Anmeldenummer: 94110314.5
(22) Anmeldetag: 02.07.1994
(51) Int. Cl.: A61C 19/10

(54) **Vorrichtung zur Anfertigung von Farbbrand-Ausfallmustern für Zahnprothesen**
Device for producing sintered colour samples for dental prostheses
Dispositif pour la production d'échantillons frittés produisant la colorisation pour prothèses dentaires

(30) Priorität: 16.09.1993 DE 4331471
(43) Veröffentlichungstag der Anmeldung: 22.03.1995
(73) Patentinhaber: Robakowski, Werner, 63303 Dreieich (DE)
(72) Erfinder: Robakowski, Werner, 63303 Dreieich (DE)

(56) Entgegenhaltungen:
- US-A- 4 470 573
- US-A- 4 617 159
- US-A- 4 793 805

## Beschreibung

Die Erfindung betrifft eine Vorrichtung zur Anfertigung von Farbbrand-Ausfallmustern für Zahnprothesen.

US-A-4,617,159 offenbart eine Vorrichtung zum Anfertigen von Farbbrand-Ausfallmustern gemäß dem Oberbegriff von Anspruch 1.

Eine weitere Vorrichtung zur Anfertigung von Farbbrand-Ausfallmustern ist aus der US-A-4,793,805 bekannt.

Die Herstellung von Zahnprothesen erfolgt in den Zahnlabors in der Weise, daß auf einen Metallträger zunächst keramische Grundmasse in im wesentlichen der Form der zu ersetzenden Zähne, darauf zahnkeramische Masse (Dentin) und darauf Schmelzmasse aufgebrannt werden, von denen die mit der Färbung der umgebenden Zähne hergestellte Schmelzmasse der Erzeugung der dem natürlichen Zahn eigenen Transluzenz dient. Schwierigkeiten treten hierbei immer wieder bei der genauen Färbung der keramischen Masse auf, zu welchem Zweck von den zahntechnischen Unternehmen Musterringe mit Zahnplättchen in den angebotenen Standardfarben zur Verfügung gestellt werden, anhand deren die dem natürlichen Gebiß am nächsten kommende Zahnfarbe ermittelt wird. Zwischentöne können danach durch Zumischung von Korrekturfarbe zu der Grundmasse dem natürlichen Vorbild weiter angepaßt werden, wobei die Richtigkeit der Farbwahl sowie der gegebenenfalls Korrektur erst am fertig gebrannten Teil festgestellt werden kann. Der Nachteil hierbei ist darin zu sehen, daß im Falle der Fehlbeurteilung die keramischen Masse wieder abgestrahlt oder abgeätzt und die Verblendung erneut aufgebracht werden muß.

Der vorliegenden Erfindung liegt als Aufgabe die Schaffung einer Einrichtung zur Herstellung von Farbbrand-Ausfallmustern für Zahnprothesen zugrunde, anhand deren unabhängig von dem prothetischen Grundkörper die Naturtreue der gewählten Mischung bestätigt werden kann.

Diese Aufgabe wird mit einer Vorichtung mit den im Patentanspruch 1 wiedergegebenen Merkmalen gelöst.

Durch die Erfindung ist eine Vorrichtung geschaffen, mit der auf einfachste Weise ein der Form der auf die Grundmasse aufgebrachten keramischen Masse mit Schmelzmasse im wesentlichen entsprechendes Musterplättchen hergestellt werden kann, anhand dessen die ausgewählte Farbmischung unabhängig von dem in Rede stehenden Prothetik-Teil kompetent überprüft werden kann. Im Falle der Fehlwahl kann die Korrektur der Farbmischung ohne den mit dem Abstrahlen bzw. Abätzen des Prothetik-Teils verbundenen Aufwand korrigiert und dessen Fertigstellung bis nach Ermittlung der absolut zutreffenden Farbmischung verschoben werden.

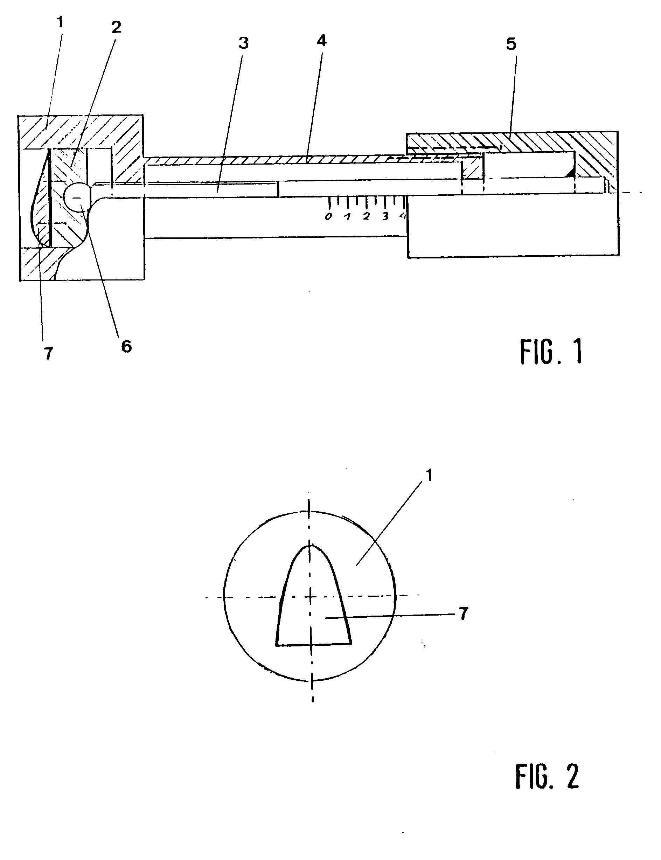

Weitere Einzelheiten der in den Patentansprüchen gekennzeichneten Erfindung werden nachstehend anhand der beigefügten Zeichnung erläutert. Es zeigen
- Fig. 1: einen Teillängsschnitt durch eine Vorrichtung zur Anfertigung von Farbbrand-Ausfallmustern für Zahnprothesen
- Fig. 2: eine Sicht von links auf Fig. 1

Die in der Zeichnung wiedergegebene Vorrichtung zur Anfertigung von Farbbrand-Ausfallmustern für Zahnprothesen besteht aus einer offenen Form 1 mit einem darin axial verstellbar geführten, eine Formplatte 2, 7 haltenden Stößel 3, wobei die Form 1 mit einem Hohlschaft 4 versehen ist, auf dessen Ende eine axial verstellbare Stellmutter 5 aufgeschraubt ist, in der das Ende des Stößels 3 gehalten ist. Die Formplatte ist zweiteilig aus einer Trägerplatte 2 und einem Formkörper 7 ausgebildet, wodurch die Herstellung von Zahnplättchen unterschiedlicher Größe durch einfachen Austausch des Formkörpers 7 ermöglicht wird. Es kann stattdessen jedoch die Formplatte einteilig ausgebildet und in ihrer Gesamtheit lösbar auf dem Stößel 3 befestigt sein. Im dargestellten Beispiel ist die Grundplatte 2 auf dem Stößel 3 mittels einer Kugelkopf-Verbindung 6 unlösbar jedoch drehbar gehalten. Entsprechend besteht im dargestellten Beispiel eine feste Verbindung zwischen dem Stößel 3 und der Stellmutter 5, an deren Stelle auch eine frei drehbare Verbindung anstelle oder zusätzlich zu der drehbaren Kugelkopfverbindung vorgesehen sein kann.

Die Herstellung des Ausfallmusters erfolgt in der Weise, daß zunächst eine der Form des zu verblendenden Zahnes nahekommender einteilige Formplatte auf den Stößel aufgesteckt und mittels der Stellmutter 5 in die Form gezogen wird, wobei das am Hohlschaft 4 angebrachte Millimeter-Maß ein Maß für die Einschraubtiefe und damit eine Hilfe bei der Bemessung der Plättchenstärke darstellt. Auf die Form werden danach mit Hilfe eines Spachtels oder Pinsels nacheinander die zahnkeramische Masse und die Schmelzmasse in der ausgewählten Mischung aufgetragen und nach der Abtrocknung abgenommen, wobei durch Ausdrehen der Formplatte 2, 7 oder zumindest des Formkörpers 7 das Untergreifen des Formplättchens und damit dessen Lösen von der Form wesentlich vereinfacht wird. Das auf diese Weise hergestellte Formplättchen kann nunmehr in der gleichen Weise wie das zu erstellende Prothetik-Teil gebrannt werden und ergibt somit ein von diesem unabhängiges exaktes Ausfall-Farbmuster der gewählten Verblendung.

## Patentansprüche

1. Vorrichtung zur Anfertigung von Farbbrand-Ausfallmustern für Zahnprothesen, mit einer offenen Form (1) und einem darin axial verstellbar geführten, eine Formplatte haltenden Stößel (3), dadurch gekennzeichnet, daß die Formplatte einteilig ausgebildet und lösbar am Stößel (3) befestigt ist, oder daß die Formplatte zweiteilig aus einer Trägerplatte (2) und einem Formkörper (7) ausgebildet ist, wobei der Formkörper (7) mit der Trägerplatte (2) lösbar und die Trägerplatte (2) und dem Stößel (3) unlösbar verbunden sind.

2. Vorrichtung nach Anspruch 1, dadurch gekennzeichnet, daß die Form (1) mit einem Hohlschaft (4) versehen ist, auf dessen Ende eine axial verstellbare Stellmutter (5) aufgeschraubt, in der das Ende des Stößels (3) gehalten ist.

3. Vorrichtung nach Anspruch 1 oder 2, dadurch gekennzeichnet, daß die Formplatte (2,7) auf dem Stößel (3) mittels einer Kugelkopf-Verbindung (6) gehalten ist.

4. Vorrichtung nach Anspruch 1 oder 2, dadurch gekennzeichnet, daß der Stößel (3) in der Stellmutter (5) frei drehbar gehalten ist.

## Claims

1. A device for the preparation of sintered colour samples for dental prostheses, with an open mould (1) and a pusher (3) guided in axially adjustable manner therein and holding a mould plate, characterised in that the mould plate is of one piece and is fastened detachably to the pusher (3), or that the mould plate is of two pieces, a support plate (2) and a moulding body (7), the moulding body (7) being detachably connected to the support plate (2) and the support plate (2) being non-detachably connected to the pusher (3).

2. A device according to Claim 1, characterised in that the mould (1) is provided with a hollow shank (4), on the end of which there is screwed an axially adjustable check nut (5) in which the end of the pusher (3) is held.

3. A device according to Claim 1 or 2, characterised in that the mould plate (2, 7) is held on the pusher (3) by means of a ball-head connection (6).

4. A device according to Claim 1 or 2, characterised in that the pusher (3) is held in the check nut (5) so as to be freely rotatable.

## Revendications

1. Dispositif de fabrication d'échantillons de glaçages colorés pour prothèses dentaires comportant un moule ouvert (1) et un coulisseau (3) guidé axialement dans celui-ci, de façon réglable, maintenant une plaque de moulage, caractérisé en ce que la plaque de moulage est formée d'une seule pièce et est fixée au coulisseau (3) de manière démontable, ou bien la plaque de moulage est formée de deux pièces, une plaque de support (2) et un corps de moulage (7), le corps de moulage (7) étant relié de façon démontable à la plaque de support (2) et la plaque de support (2) étant reliée de façon fixe au coulisseau (3).

2. Dispositif selon la revendication 1, caractérisé en ce que le moule (1) est muni d'une tige creuse (4) à l'extrémité de laquelle est vissé un écrou de réglage (5), pouvant être déplacé axialement, dans lequel est maintenue l'extrémité du coulisseau (3).

3. Dispositif selon la revendication 1 ou 2, caractérisé en ce que la plaque de moulage (2,7) est maintenue sur le coulisseau (3) au moyen d'une liaison à rotule (6).

4. Dispositif selon la revendication 1 ou 2, caractérisé en ce que le coulisseau (3) est maintenu dans l'écrou de réglage (5) de manière à pouvoir tourner librement.
